# EUROPÄISCHE PATENTSCHRIFT

(11) **EP 2 908 013 B1**
(45) Veröffentlichungstag und Bekanntmachung des Hinweises auf die Patenterteilung: **02.08.2017**
(21) Anmeldenummer: 15154062.2
(22) Anmeldetag: 06.02.2015
(51) Int. Cl.: B60P 1/16, F15B 11/00, F15B 11/044, F15B 13/01

(54) **Hydraulisches Kippsystem für einen mittels eines Kippventils stetig steuerbaren, in der Senkgeschwindigkeit nicht durch das Kippventil begrenzten Senkbetrieb**
Hydraulic system for a lowering operation that can be constantly controlled with a tilting valve with a lowering speed that is not limited by the tilting valve
Système pivotant hydraulique pour un abaissement pouvant être commandé par une soupape pivotante, la vitesse d'abaissement n'étant pas limitée par la soupape pivotante

(30) Priorität: 11.02.2014 DE 102014202436
(43) Veröffentlichungstag der Anmeldung: 19.08.2015
(73) Patentinhaber: Franz Xaver Meiller Fahrzeug- und Maschinenfabrik-GmbH & Co KG, 80997 München (DE)
(72) Erfinder: Kibler, Florian, 81245 München (DE)
(74) Vertreter: Weickmann & Weickmann PartmbB

(56) Entgegenhaltungen:
- EP-A2- 1 696 137
- DE-A1- 19 923 345
- DE-A1-102007 017 472
- US-A1- 2012 180 878

## Beschreibung

Die Erfindung betrifft ein hydraulisches System zum Kippen wenigstens einer auf einem Kipperfahrzeug befindlichen Kippbrücke, umfassend: wenigstens einen Hydraulikzylinder als Kippantriebsaggregat für die Kippbrücke, wenigstens ein vorzugsweise elektrisch oder pneumatisch ansteuerbares Kippventil zur Steuerung eines Hubbetriebs, eines Haltebetriebs und eines Senkbetriebs des Hydraulikzylinders, und wenigstens eine Hydrauliksenke und wenigstens eine Hydraulikquelle. DE 10 2007 017 472 A1 offenbart ein derartiges hydraulisches System gemäß dem Oberbegriff des Anspruchs 1. Das Kippventil steht mit dem Hydraulikzylinder, einem die Hydrauliksenke bildenden Hydraulikflüssigkeitsreservoir und einer die Hydraulikquelle bildenden Hydraulikpumpe in Hydraulikverbindung. Bei dem Hydraulikzylinder handelt es sich um einen einfach wirkenden Teleskopzylinder, und die Ansteuerung des Teleskopzylinders und damit der Kipphydraulik erfolgt durch ein 3/3-Wege-Ventil mit einem Druckölversorgungsanschluss, an dem die Hydraulikpumpe angeschlossen ist, einem Ölrücklaufanschluss, an den das Hydraulikflüssigkeitsreservoir angeschlossen ist, und einem Hydraulikzylinderanschluss, an dem der Hydraulikzylinder angeschlossen ist. Mit dem Kippventil werden die Funktionen Heben, Halt und Senken bereitgestellt. Hierfür ist ein solches Kippventil in der Regel als proportional steuerndes Ventil ausgeführt.

Ein Senken der Kippbrücke erfolgt durch die entsprechende Schaltstellung am Kippventil aufgrund des Gewichts der Kippbrücke, woraus sich aufgrund der gegebenen effektiven Durchflusswiderstände eine maximale Senkgeschwindigkeit für die Kippbrücke ergibt. Es besteht allerdings die Forderung nach immer leichteren Kippbauten bei erhöhter Nutzlast, typischerweise aber mit gegenüber älteren Lösungen gleich dimensioniertem Hydraulikzylinder zum Vorsehen der kippbaren Nutzlast. Dies hat zur Folge, dass eine geringere Masse zum Einschieben des Hydraulikzylinders aus der ausgefahrenen (aufgekippten) Stellung zur Verfügung steht, was zu höheren Senkseiten führt. Dem kann unter anderem aus wirtschaftlichen Gründen nur bedingt mit größer dimensionierten Kippventilen begegnet werden. Es resultieren so relativ große unproduktive Zeitspannen, in welchen das Kipperfahrzeug allenfalls nur sehr langsam von der Entladestelle wegbewegt werden kann, aufgrund der anderenfalls bestehenden Umsturzgefahr, und unter keinen Umständen am Straßenverkehr teilnehmen darf, insbesondere wegen einer Überschreitung der zulässigen Gesamthöhe. Die Produktivität ist somit unzureichend.

Zum Erreichen einer größeren, nicht mehr durch den Durchfluss durch das Kippventil begrenzten Senkgeschwindigkeit wurden schon verschiedene Ansätze verfolgt. So hat man in der Leitung zwischen dem Hydraulikzylinder und dem Kippventil ein Bypass-Ventil eingefügt, welches durch ein Senken-Signal prinzipiell beliebiger Natur und Herkunft zu öffnen ist, um Öl aus dem Hydraulikzylinder an dem Kippventil vorbei in den Rücklauf oder in das Reservoir zu leiten. Mit solch einem Bypass-Ventil kann die in der Regel gewünschte proportionale Steuerbarkeit der Sinkgeschwindigkeit aber nur dadurch erhalten werden, dass die Bypass-Schaltung entweder abstellbar ist, so dass dann das Senken nur über das Kippventil erfolgt, oder dass das Bypass-Ventil selbst proportional ansteuerbar ist, mit entsprechendem steuerungstechnischen Mehraufwand.

Es wurde auch schon ein Hydraulikzylinder mit einem zweiten Anschluss verwendet, über welchen mittels eines analog zum Bypass-Ventil angesteuerten 2/2-Wege-Ventils ein zusätzlicher Abfluss von Hydrauliköl zur Hydrauliksenke im Senkbetrieb ermöglicht wurde. An dieser Lösung ist nachteilig, dass neben einem zusätzlichen Ventil eine unübliche und Marktanforderungen nicht entsprechende Verrohrungslösung für den Hydraulikzylinder erforderlich ist. Für eine proportionale Steuerbarkeit ist ebenfalls entweder ein proportional ansteuerbares 2/2-Wege-Ventil mit entsprechendem steuerungstechnischem Mehraufwand nötig oder das 2/2-Wege-Ventil muss unabhängig von den Schaltzuständen des Kippventils deaktivierbar sein.

Eine vom Hydraulikaufwand her günstig Lösung verwendet eine hydraulische 3-Wege-Weiche zwischen dem Hydraulikzylinder und dem HydraulikzylinderAnschluss des Kippventils, um eine höhere Senkgeschwindigkeit zu erreichen, etwa eine solche 3-Wege-Weiche, wie sie beispielsweise von der Firma AlphaFluid Hydrauliksysteme Müller GmbH (72124 Pliezhausen, Deutschland) beziehbar ist. Eine solche 3-Wege-Weiche ist von einem 2/2-Wege-Sitzventil mit einem Rückschlagventil und einer Steuerdüse gebildet. Zum Heben ist der dem Hydraulikzylinder über die 3-Wege-Weiche zugeführte Zuführ-Volumenstrom mittels des Kippventils proportional steuerbar. Die Druckentlastung der 3-Wege-Weiche zum Senken hat aber dann zur Folge, dass die 3-Wege-Weiche einen nicht steuerbaren Öffnungsquerschnitt für das Ablassen eines Ablass-Volumenstroms aus dem Hydraulikzylinder unter Umgehung des Kippventils zu der Hydrauliksenke freigibt, so dass die Senkgeschwindigkeit nicht proportional steuerbar ist. Dies führt zu einem Verlust von Feinsteuerbarkeit und Bediensicherheit. Ein Vorteil der Lösung mit der 3-Wege-Weiche ist allerdings, dass keine zusätzlichen Steuersignale mit entsprechend größerer Steuerungskomplexität und auch keine zusätzlichen Leitungen zum Hydraulikzylinder erforderlich sind.

Aus der EP 1 696 137 A2 ist ein Hydrauliksystem in mehreren Ausführungsvarianten bekannt. Gemäß der in Figur 4 gezeigten Ausführungsvariante erfolgt eine herkömmliche Steuerung eines Ablass-Volumenstroms mittels eines als "switching valve" bezeichneten Umschaltventils. Weitere Ventile dienen zur Vermeidung von Überdrücken.

Im Hinblick auf den vorstehend angesprochenen Stand der Technik geht die Erfindung konkreter aus von einem hydraulischen System gemäß Anspruch 1 zum Kippen wenigstens einer auf einem Kipperfahrzeug befindlichen Kippbrücke, umfassend wenigstens einen Hydraulikzylinder als Kippantriebsaggregat für die Kippbrücke, wenigstens ein vorzugsweise elektrisch oder pneumatisch ansteuerbares Kippventil zur Steuerung eines Hubbetriebs, eines Haltebetriebs und eines Senkbetriebs des Hydraulikzylinders, wenigstens eine Hydrauliksenke und wenigstens eine Hydraulikquelle, sowie wenigstens eine zumindest mit dem Hydraulikzylinder, dem Kippventil und der Hydrauliksenke in Hydraulikverbindung stehende Ventilanordnung, über welche in Abhängigkeit von Betriebszuständen des Kippventils auf Basis eines Abgabevolumenstroms der Hydraulikquelle dem Hydraulikzylinder Hydraulikflüssigkeit in einem Zuführ-Volumenstrom für den Hubbetrieb zuführbar und aus dem Hydraulikzylinder Hydraulikflüssigkeit in einem Ablass-Volumenstrom unter Umgehung des Kippventils zu der Hydrauliksenke für den Senkbetrieb ablassbar ist.

Aufgabe der Erfindung ist es, eine verbesserte Lösung bereitzustellen, die einerseits vergleichsweise große Senkgeschwindigkeiten ermöglicht und andererseits eine hinreichende Steuerung des Absenkens insbesondere der Absenkgeschwindigkeit, ermöglicht, ohne hierfür einen hohen steuerungstechnischen bzw. systemtechnischen Aufwand in Kauf nehmen zu müssen.

Zur Lösung dieser Aufgabe wird das in Anspruch 1 definierte hydraulische System bereitgestellt.

Erfindungsgemäß ist der Ablass-Volumenstrom von dem Hydraulikzylinder unter Umgehung des Kippventils zu der Hydrauliksenke ablassbar, so dass das Kippventil den Ablassvolumenstrom nicht begrenzt. Es kann also durch entsprechende Dimensionierung der Ventilanordnung dafür gesorgt werden, ein den maximalen Ablass-Volumenstrom bestimmender steuerbarer effektiver Öffnungsquerschnitt so dimensioniert ist, dass der resultierende maximale Ablass-Volumenstrom eine hinreichende Senkgeschwindigkeit für die Kippbrücke ergibt. Da der Ablass-Volumenstrom trotzdem stetig steuerbar oder regelbar ist, bleibt die benötigte Steuerbarkeit des Senkgeschwindigkeit erhalten.

Nach der Erfindung können beim Betrieb von Nutzfahrzeugaufbauten entstehende Leerlaufzeiten gegenüber dem Stand der Technik reduziert werden, wodurch die Produktivität erhöht wird, ohne Verlust von Steuerbarkeit und Bediensicherheit.

Je nach Aufbau und Gewicht einer Kippbrücke gegebenenfalls relativ große, unproduktive Zeitspannen nach dem Entleeren der Kippbrücke, in welchen das Kipperfahrzeug nur sehr langsam von der Entladestelle wegbewegt werden kann (wegen bestehender Umsturzgefahr) und unter keinen Umständen am Straßenverkehr teilnehmen darf (wegen Überschreitung der zulässigen Gesamthöhe) können so vermieden werden. Insgesamt wird durch die Reduktion der Senkzeiten die Produktivität deutlich erhöht.

Bevorzugt ist vorgesehen, dass das Kippventil über die Ventilanordnung mit dem Hydraulikzylinder in Hydraulikverbindung steht oder bringbar ist. Weiterhin ist es bevorzugt, dass der Zuführ-Volumenstrom dem Hydraulikzylinder von der Hydraulikquelle über eine über das Kippventil und über die Ventilanordnung verlaufende Hydraulikverbindung zuführbar ist.

Das erfindungsgemäße hydraulische System ist so kompatibel zu auf dem Markt üblichen Hydraulik-Anordnungen und Hydraulik-Schaltungen, zum Beispiel zu einer Kippbrückenhydraulik mit einer Hydraulikleitung zwischen dem auch als Kippzylinder ansprechbaren Hydraulikzylinder und dem Kippventil.

Bevorzugt ist vorgesehen, dass die Ventilanordnung wenigstens ein Rückschlagventil umfasst, über welches der Zuführ-Volumenstrom unter Umgehung wenigstens eines anderen Ventils der Ventilanordnung dem Hydraulikzylinder zuführbar ist. Der systemtechnische Aufwand wird so sehr gering gehalten.

Erfindungsgemäß ist vorgesehen, dass der Ablass-Volumenstrom mittels des Kippventils gemäß einer Ansteuerung des Kippventils in Abhängigkeit von einem Volumenstrom an Hydraulikflüssigkeit durch das Kippventil steuerbar oder regelbar ist. Dabei ist vorgesehen, dass für die Herbeiführung des Senkbetriebs Hydraulikflüssigkeit in einem Steuer-Volumenstrom von der Ventilanordnung über das Kippventil zu der Hydrauliksenke ablassbar ist und dass der resultierende Ablass-Volumenstrom stetig von dem Steuer-Volumenstrom abhängt, gewünschtenfalls linear mit diesem ansteigt (also proportional zu diesem ist) oder progressiv oder degressiv mit dem Steuer-Volumenstrom ansteigt. Das Kippventil kann dann wie ein herkömmliches Kippventil ausgeführt sein, wobei der Steuer-Volumenstrom dem Ablass-Volumenstrom aus dem Hydraulikzylinder einer herkömmlichen Lösung ohne erfindungsgemäße Ventilanordnung entspricht, der aufgrund des zu geringen effektiven maximalen Öffnungsquerschnitts des Kippventils nur eine deutlich geringere Senkgeschwindigkeit ermöglichen würde. Es wurde hierbei davon ausgegangen, dass bei einer die Erfindung ausführenden Lösung der Ablass-Volumenstrom größer als der Steuer-Volumenstrom ist, was in der Regel der Fall sein wird und gerade die erhöhte Senkgeschwindigkeit ermöglicht.

Eine besonders bevorzugte Ausgestaltung zeichnet sich dadurch aus, dass das erfindungsgemäß vorgesehene wenigstens eine Stetigventil mit wenigstens einem stetig zwischen einer im Hubbetrieb und im Haltebetrieb eingenommenen ersten Stellung und einer im Senkbetrieb bei maximalem Ablass-Volumenstrom eingenommenen zweiten Stellung verstellbares Ventilelement umfasst, welches dafür ausgeführt ist, bei einer Bewegung aus der ersten Stellung in Richtung zur zweiten Stellung wenigstens einen primären Steuerdurchlass aufzusteuern, über den Hydraulikflüssigkeit von einer dem Hydraulikzylinder zugeordneten ersten Seite des Stetigventils zu einer dem Kippventil zugeordneten zweiten Seite des Stetigventils ablassbar ist, in Folge des Ablassens des Steuer-Volumenstroms von der zweiten Seite des Stetigventils über das Kippventil zu der Hydrauliksenke. Das Ventilelement kann dabei eine Gleichgewichts- oder Regelposition einnehmen, in der der Volumenstrom an Hydraulikflüssigkeit durch den aufgesteuerten Öffnungs-Querschnitt des primären Steuerdurchlasses gleich dem von der zweiten Seite des Stetigventils angelassenen Steuer-Volumenstrom ist, so dass auf der zweiten Seite des Stetigventils, gegebenenfalls entsprechend einem Federraum mit einer auf das Ventilelement wirkenden Vorspannfeder, die Summe der zulaufenden und ablaufenden Volumenströme konstant ist und ein definierter, die momentane Position des Ventilelements bestimmender bzw. mitbestimmender Druck auf der zweiten Seite des Stetigventils herrscht.

Bevorzugt ist vorgesehen, dass das Ventilelement in der ersten Stellung einen minimalen, aber nicht verschwindenden Öffnungsquerschnitt des primären Steuerdurchlasses freigibt, so dass in der ersten Stellung des Ventilelements auf beiden Seiten des Stetigventils im Wesentlichen der gleiche Druck herrscht. Wird dann über das Kippventil Hydraulikflüssigkeit in dem Steuer-Volumenstrom von der zweiten Seite des Stetigventils zu der Hydrauliksenke abgelassen, so senkt dies den Druck auf der zweiten Seite des Stetigventils ab, so dass das Ventilelement aufgrund der auf das Ventilelement insgesamt wirkenden Kräfte sich von der ersten Stellung in Richtung zur zweiten Stellung bewegt, bis die Gleichgewichts- oder Regelposition eingenommen ist. Die Gleichgewichts- oder Regelposition ist stetig veränderbar durch stetige Vergrößerung oder Verkleinerung des Steuer-Volumenstroms mittels dem Kippventil.

Zur Steuerung bzw. Regelung des Ablass-Volumenstroms vermittels des Ventilelements wird vorgeschlagen, dass dieses dafür ausgeführt ist, bei einer Bewegung aus der ersten Stellung in Richtung zur zweiten Stellung wenigstens einen sekundären Steuerdurchlass aufzusteuern, über den der Ablass-Volumenstrom unter Umgehung des Kippventils zu der Hydrauliksenke für den Senkbetrieb ablassbar ist. Bezugnehmend auf die angesprochene Realisierung mit der sich einstellenden Gleichgewichts- oder Regelposition des Ventilelements wird jede einnehmbare Gleichgewichts- oder Regelposition einem bestimmten wirksamen Öffnungsquerschnitt des sekundären Steuerdurchlasses entsprechen, so dass der Ablass-Volumenstrom von dem über das Kippventil zu der Hydrauliksenke abgelassenen Steuer-Volumenstrom abhängt und damit mittels des Kippventils, durch Steuerung oder Regelung des Steuer-Volumenstroms, steuerbar bzw. regelbar ist.

In der Regel wird man vorsehen, dass der sekundäre Steuerdurchlass in der ersten Stellung des Ventilelements geschlossen ist, insbesondere für den Haltebetrieb.

In der Regel wird man vorsehen, dass der Ablass-Volumenstrom monoton, vorzugsweise streng monoton, mit dem Steuer-Volumenstrom ansteigt.

Gemäß einer in der Regel durchaus zweckmäßigen Ausgestaltung des Hydrauliksystems kann man vorsehen, dass der Ablass-Volumenstrom bezogen auf eine die Abhängigkeit des Ablass-Volumenstroms von dem Steuer-Volumenstrom angebende Kennlinie zumindest bereichsweise linear mit dem Steuer-Volumenstrom ansteigt. Der Ablass-Volumenstrom ist dann proportional zu dem Steuer-Volumenstrom.

Eine andere Möglichkeit ist, dass der Ablass-Volumenstrom bezogen auf eine/die die Abhängigkeit des Ablass-Volumenstroms von dem Steuer-Volumenstrom angebende Kennlinie zumindest bereichsweise degressiv mit dem Steuer-Volumenstrom ansteigt. So lassen sich für kleine Steuer-Volumenströme vergleichsweise große Ablass-Volumenströme erreichen und ein Feinsteuerbereich, in dem der Ablass-Volumenstrom weniger empfindlich auf Änderungen der Steuer-Volumenstroms reagiert, ist dann erst für vergleichsweise große Steuer-Volumenströme, beispielsweise etwa erst im letzten Drittel des Verstellwegs des angesprochenen Ventilelements von der ersten Stellung zur zweiten Stellung, wirksam.

Gegenüber den angesprochenen Varianten mit dem linearen Steuerverhalten und dem degressiven Steuerverhalten wird in einem erfindungsgemäßen hydraulischen System in der Regel ein progressives Steuerverhalten zu bevorzugen sein. Hierzu wird vorgeschlagen, dass der Ablass-Volumenstrom bezogen auf eine/die die Abhängigkeit des Ablass-Volumenstroms von dem Steuer-Volumenstrom angebende Kennlinie zumindest bereichsweise progressiv mit dem Steuer-Volumenstrom ansteigt. Man kann hierdurch speziell vorsehen, dass eine der Kipp-Anwendung besser entsprechende Spreizung des Steuer/Regel-Bereichs erreicht wird, für ein verbessertes Feinsteuerverhalten bei kleineren Steuer-Volumenströmen. Erst für große Steuer-Volumenströme können dann auch große Ablass-Volumenströme erreicht werden. Beispielsweise kann ein verbessertes Feinsteuerverhalten im ersten Drittel des Stellwegs des angesprochenen Ventilelements von der ersten Stellung zu der zweiten Stellung vorgesehen werden.

Allgemein wird vorgeschlagen, dass die Ventilanordnung wenigstens eine hydraulische 3-Wege-Weiche bildet. Wie erwähnt, umfasst die Ventilanordnung wenigstens ein Stetigventil, welches vorzugsweise als 2-Wege-Sitzventil (insbesondere 2/2-Wege-Sitzventil) oder/und als Valvistor ausgeführt ist. Ein solcher Valvistor kann wenigstens ein zwischen einer ersten Stellung und einer zweiten Stellung verstellbares Ventilelement umfassen, welches dafür ausgeführt ist, wenigstens einen primären Steuerdurchlass und wenigstens einen sekundären Steuerdurchlass aufzusteuern, wie schon angesprochen. Das Ventilelement kann durch eine Federanordnung in Richtung der ersten Stellung vorgespannt sein, oder aufgrund von unterschiedlichen Druckangriffsflächen des Ventilelements bezogen auf eine erste Seite und eine zweite Seite des Ventilelements durch die Hydraulikflüssigkeit in Richtung einer Einnahme der ersten Stellung beaufschlagbar sein. Es kann sich um einen Valvistor handeln, wie beispielsweise von der Firma EATON Corporation als "Vickers HFV (Hydraulic Feedback Valvistor)" angeboten, der ohne Federvorspannung für das als "poppet" bezeichnete Ventilelement auskommt. Ein solches Valvistor-Sitzventil wurde erstmals in einer Dissertation von Bo. R. Andersson "On the Valvistor, a proportionally controlled feed valve" (PhDthesis, LiTH, 1984, ISBN 91-7372-748-2) beschrieben. Informationen zum Valvistor-Sitzventil und Weiterentwicklungen davon finden sich in einem Aufsatz der Autoren Björn Eriksson, Jonas Larsson, Jan-Ove Palmberg "A Novel Valve Concept Including the Valvistor Poppet Valve" in Ventil 14 / 2008/ 5, Seiten 438 bis 442. Ein Valvistor, bei dem das Ventilelement federvorgespannt ist, ist in der DE 101 241 54 B4 mit dem Titel "Stromregelventil" detailliert beschrieben.

Bekannte Ausführungen eines solchen proportional steuerbaren, als Valvistor bezeichenbaren 2/2-Wege-Ventils verfügen, wie mit dem durch das angesprochene Ventilelement aufsteuerbaren primären Steuerdurchlass angesprochen, über eine linear über den Hub veränderliche Schubblende. Eine solche Schubblende ist herkömmlich beispielsweise als rechteckiges Fenster mit einer Breite w und einer über den Hub des Ventilkolbens veränderlichen Höhe h ausgebildet, so dass aus einer linearen Durchfluss-Querschnittsveränderung am steuernden Ventil, in der vorliegenden Anwendung das Kippventil, eine lineare Durchlass-Querschnittsveränderung an der Schubblende und somit am Öffnungsquerschnitt der sogenannten Hauptstufe folgt. Der durch das steuernde Ventil eingeprägte Öffnungsquerschnitt entspricht also dem der Schubblende, welcher wiederum in einem konstanten Verhältnis zum Öffnungsquerschnitt der Hauptstufe steht, woraus sich das angesprochene lineare Steuerverhalten ergibt. Ein solches lineares Übertragungsverhalten wird in der Praxis in der Regel zu einem ungeeigneten "Feinsteuerverhalten" zum Senken einer Kippbrücke führen.

Demgegenüber ist es bevorzugt, ein progressives Steuerverhalten vorzusehen. Dies wird dadurch erreicht, dass der wiederum dem durch das Steuerventil eingeprägten Öffnungsquerschnitt entsprechende Öffnungsquerschnitt der Schubblende in einem progressiv zunehmenden Verhältnis zum Öffnungsquerschnitt der Hauptstufe steht, so dass für einen kleinen Steuer-Volumenstrom nur ein vergleichsweise kleiner Ablass-Volumenstrom resultiert, der dann überproportional, beispielsweise quadratisch, mit zunehmerden Steuer-Volumenstrom ansteigt. Das kann dadurch erreicht werden, dass die Schubblende eine über den Steuerweg (Hub) des Ventilelements veränderliche Breite aufweist. So kann durch eine sich sehr einfache Modifikation gegenüber herkömmlichen Valvistor-Ventilen eine der speziellen Kipper-Anwendung besser entsprechende Spreizung des Regelbereichs erreicht werden, beispielsweise für ein verbessertes Feinsteuerverhalten für das erste Drittel des Hubs des Ventilelements, also des Stellwegs aus der ersten Stellung in die zweite Stellung.

Wie ebenfalls schon erwähnt, kann für mache Anwendungen ein degressives Steuerverhalten gewünscht sein, was beispielsweise durch Umkehrung der Schubblendengeometrie gegenüber dem progressiven Steuerverhalten erreicht werden kann, so dass der Feinsteuerbereich beispielsweise erst im letzten Drittel des Hubs des Ventilelements wirksam ist.

Die Erfindung wird im Folgendem anhand von in den Figuren veranschaulichten Ausführungsbeispielen näher erläutert.
- Figur 1: ist ein vereinfachtes Prinzipschaltbild einer Ausführungsform eines erfindungsgemäßen Hydrauliksystems.
- Figur 2: zeigt eine durch ein Kippventil des Hydrauliksystem ansteuerbare Ventilanordnung des Hydrauliksystems, die eine ein ValvistorVentil umfassende, stetig (z.B. proportional) steuerbare 3-WegeWeiche für die Rücklaufsteuerung des Hydraulikzylinders des Hydrauliksystems bildet.
- Figur 3: zeigt eine herkömmliche Ausgestaltung eines Valvistor-Ventils, dessen Schubblende ein lineares Steuer/Regel-Verhalten ergibt.
- Figur 4: zeigt eine erfindungsgemäß bevorzugte Ausgestaltung eines Valvistor-Ventils, dessen Schubblende ein progressives Steuer/Regel-Verhalten ergibt.
- Figur 5: zeigt eine alternative Ausgestaltung des Valvistor-Ventils, dessen Schubblende ein degressives Steuer/Regel-Verhalten ergibt.

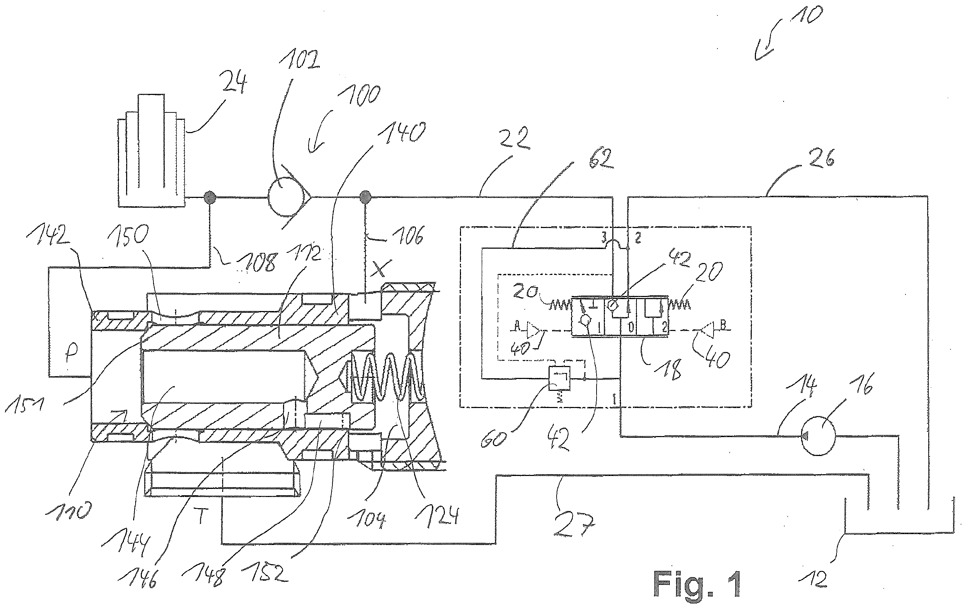

Das in der Prinzipdarstellung der Figur 1 dargestellte Hydrauliksystem 10 umfasst ein Hydrauliksenke in Form eines Vorratsbehälters 12 für eine Hydraulikflüssigkeit, insbesondere ein Hydrauliköl. Von diesem Behälter 12 geht eine Speiseleitung 14 ab, welches mittels einer als Hydraulikquelle dienenden Pumpe 16 das Hydrauliksystem mit Hydrauliköl versorgt. Die Speiseleitung 14 steht in Verbindung mit einem Kippventil 18, das in drei Stellungen 0, 1 und 2 einstellbar ist. Das Kippventil 18 ist durch angedeutete Federn 20 in die Stellung 0 (Neutralstellung) vorgespannt, die auch als Haltestellung dient.

Vom Kippventil 18 erstreckt sich eine weitere Zuführleitung 22 über eine noch detailliert zu beschreibende Ventilanordnung 100 zu einem hier als Teleskopzylinder ausgebildeten, einfach wirkenden Hydraulikzylinder 24, welcher als Antriebsaggregat einer nicht dargestellten Kippbrücke dient. Ferner verläuft zwischen dem Kippventil 18 und dem Tank 12 eine Rückführleitung 26, über welche Hydrauliköl vom Kippventil 18 in den Tank zurückfließen kann.

Eine weitere Rückführleitung 27 führt von der Ventilanordnung 100 in den Tank 12, über die in Abhängigkeit von Betriebszuständen der Ventilanordnung Hydrauliköl vom Hydraulikzylinder 24 in den Tank ablassbar ist.

Wenn der Hydraulikzylinder 24 von seiner in Figur 1 angedeuteten Fahrbetriebsstellung in die Kippbetriebsstellung ausgefahren bzw. die Kippbrücke angehoben werden soll, wird das Kippventil 18 beispielsweise über einen Joystick-artigen Geber, der das Kippventil pneumatisch oder elektrisch ansteuert (bei 40) in die Stellung 1 gebracht, in der die Pumpe 16 Hydrauliköl über die Leitungen 14 und 22 und ein Rückschlagventil 102 der Ventilanordnung 100 dem Hydraulikzylinder 24 zuführt. Ein dem Kippventil 18 zugehöriges Rückschlagventil 42 verhindert in der Stellung 1 (Kippen), dass Hydrauliköl aus der Leitung 22 in Richtung zur Pumpe 16 zurückfließt, so dass der zum Anheben der Kippbrücke erforderliche Druck in der Leitung 22 aufgebaut werden kann.

Wenn die Kippbrücke wieder abgesenkt werden soll, wird das Kippventil 18 beispielsweise mittels des angesprochenen Gebers in die Stellung 2 (Senken) gebracht. Diese ermöglicht einen Abfluss von Hydrauliköl aus einem Steuerbereich 104 der Ventilanordnung 100, welche hierzu einen über eine Leitung 106 an der Leitung 22 angeschlossenen Steueranschluss X aufweist. Die Ventilanordnung 100 ist dafür ausgelegt, dass dieser Abfluss von Hydrauliköl über den Steueranschluss X einen Ablass-Volumenstrom an Hydrauliköl von dem Hydraulikzylinder 24 durch die Ventilanordnung und dann über die Rückführleitung 27 in den Tank 12 zur Folge hat. Der Hydraulikzylinder 24 ist hierzu an einen Eingangsanschluss P der Ventilanordnung angeschlossen und die Rückführleitung 27 ist an einem Ausgangsanschluss T der Ventilanordnung 100 angeschlossen. Der Ablass-Volumenstrom über den Ausgangsanschluss T und die Rückführleitung 27 in den Tank 12 ist abhängig von einem Steuer-Volumenstrom aus dem Steuerbereich 104 über den Steueranschluss X, die Leitungen 106 und 102, das Kippventil 18 in dessen Stellung 2 und die Rückführleitung 26 in den Tank 12.

Bei abgesenkter Kippbrücke, also bei Fahrbetriebsstellung des Hydraulikzylinders 24 wird das Kippventil 18 beispielsweise mittels des angesprochenen Gebers in die Neutralstellung 0 gebracht.

Zum grundsätzlichen Aufbau ist noch zu erwähnen, dass das Hydrauliksystem eine Überdruckentlastungseinrichtung 60 aufweist, über die bei vollständig ausgefahrenem Hydraulikzylinder Hydrauliköl über eine Überdruckausgleichsleitung 62 zur Leitung 26 und damit zum Tank 12 hin abgeführt wird, wobei der zum Anheben der Kippbrücke erforderliche Druck in der Hydraulikleitung 22 durch das Rückschlagventil 42 im Kippventil 18 gehalten wird. Somit besteht bei in Stellung 1 gehaltenem Kippventil keine Gefahr einer Beschädigung des Hydrauliksystems trotz vollständig ausgefahrenem Hydraulikzylinder und weiter Hydrauliköl fördernder Pumpe.

Die angesprochene Funktion der Ventilanordnung 100 betreffend das Ablassen von Hydrauliköl aus dem Hydraulikzylinder, welches unter der den Hydraulikzylinder in Einfuhrrichtung wirkenden Gewichtsbeaufschlagung durch die Kippbrücke erfolgt, wird durch einen sogenannten Valvistor 110 der Ventilanordnung 100 erreicht, als dessen Pilotventil das Kippventil 18 dient. Die sogenannte Hauptstufe (im Folgenden ebenfalls mit dem Bezugszeichen 110 angesprochen) des Valvistors weist ein Ventilelement in Form eines als Sitzschieber ausgeführten Kolbens 112 auf.

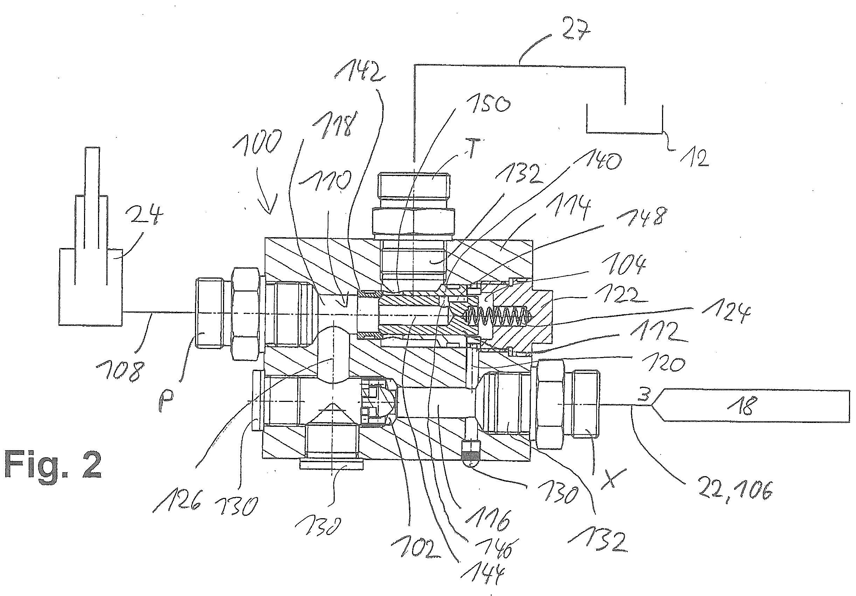

Bevorzugt ist die Ventilanordnung 100 mit dem Rückschlagventil 102 und der Hauptstufe 110 des Valvistors als integrale Ventileinheit mit einem gemeinsamen Ventilgehäuse ausgeführt, wofür in Figur 2 ein Ausführungsbeispiel gegeben ist. Das gemeinsame Ventilgehäuse 114 ist von zwei sich vorzugsweise parallel zueinander erstreckende Ventilbohrungen 116 und 118 durchsetzt. Die Ventilbohrung 116 mündet in dem Steueranschluss X und enthält das Rückschlagventil 102. Zwischen dem Steueranschluss X und dem Rückschlagventil 102 ist die Ventilbohrung 118 mittels einer sich in radialer Richtung ausgeführten Verbindungsbohrung 120 mit einem in der Ventilbohrung 118 zwischen dem Kolben 112 und einem die Ventilbohrung verschließenden Verschluss 122 ausgebildeten Steuerbereich 104 verbunden, der im Falle des Ausführungsbeispiels auch als Federraum 104 für eine den Kolben 112 vorspannende Regelfeder 124 angesprochen werden kann.

Die Ventilbohrung 118 mündet axial in dem Eingangsanschluss P und ist über eine vorzugsweise zur Verbindungsbohrung 120 parallele radiale Verbindungsbohrung 126 verbunden, und zwar einerseits zwischen dem Eingangsanschluss P und dem Kolben 112 und andererseits auf der Abflussseite des Rückschlagventils 102, also auf dessen zum Eingangsanschluss X entgegengesetzten Seite. Die Verbindungsbohrung 126 hat einen deutlich größeren Durchlass-Öffnungsquerschnitt als die Verbindungsbohrung 112, in ähnlicher Größenordnung wie die Ventilbohrungen 116 und 118. Verschlusselemente zum Verschließen der Ventilbohrung 116 am zum Steueranschluss X entgegengesetzten Ende und der beiden Verbindungsbohrungen sind mit 130 bezeichnet.

In einem mittleren Bereich ist die Ventilbohrung 118 über eine in der Ventilbohrung 118 mündende Radialbohrung 132 mit dem Ausgangsanschluss T verbunden, richtiger verbindbar, wie noch zu erläutern ist.

Die Verbindungsbohrung 120 und der zum Steueranschluss X führende Abschnitt der Ventilbohrung 116 bilden einen Steuerkanal 132, der den Steuerbereich 104 bzw. den Federraum 104 mit dem Steueranschluss X verbindet.

Die Ventilbohrung 118 erweitert sich stufenförmig in Richtung zum Verschlusselement 122 hin. Im Bereich der Radialbohrung 132 ist eine Kolbensführung 140 mit einem Ventilsitz 142 ausgebildet, gegen den der als Sitzschieber ausgeführte Kolben 112 durch die sich am Verschluss 122 abstützende Regelfeder 124 vorgespannt ist. Beim Ausführungsbeispiel handelt es sich bei der Kolbenführung 140 und den Ventilsitz 142 um gegenüber dem Gehäuse 114 gesonderte Elemente, die in die Ventilbohrung 118 aufgenommen sind.

Im Kolben 122 ist eine Axialbohrung 144 ausgebildet, die über eine Radialbohrung 146 mit einem Steuerschlitz 148 des Kolbens verbunden ist. In dem von dem Steuerschlitz 148 entfernten, dem Ventilsitz 142 benachbarten Endbereich der Ventilführung 140 sind Radialdurchbrüche 150 ausgebildet, über die bei vom Ventilsitz 142 abgehobenem Kolben 112 der Eingangsanschluss P mit dem Ausgangsanschluss T verbunden ist. Sitzt der Kolben 112 auf dem Ventilsitz 142 auf, ist diese Verbindung zwischen den Anschlüssen P und T unterbrochen.

Die Radialdurchbrüche 150 dienen als Aufsteueröffnungen, die bei einer Bewegung des Kolbens 112 von einer ersten Position im Eingriff mit dem Ventilsitz 142 durch eine Steuerkante des Kolbens an dessen zur Regelfeder 124 entgegengesetzten Ende aufgesteuert werden, also wenn der Kolben 112 sich in der Darstellung der Figur 2 nach rechts bewegt.

Der zum Ventilsitz 118 entgegengesetzte Endbereich der Ventilführung 140 der im Axialbereich des Steuerschlitzes 148 liegt, bildet eine Steuerkante 152, die zusammen mit Steuerschlitz 148 einen aufsteuerbaren primären Steuerdurchlass bildet, über den der Steuerbereich 104 über die Bohrungen 146 und 144 im Kolben 112 mit dem am Eingangsanschluss P angeschlossenen Abschnitte der Ventilbohrung 18 verbindbar, genauer mit aufsteuerbaren Öffnungsquerschnitt verbunden ist. In der in Figur 2 und entsprechend in Figur 1 vergrößert dargestellten Grundposition für den Kolben 112 (also in der im Eingriff mit dem Ventilsitz 142 befindlichen "ersten Stellung"), gibt die dem Steuerschlitz 148 zugeordnete Steuerkante 152 (vgl. Figur 1) bereits einen sehr geringen Öffnungsquerschnitt für den Steuerschlitz 148 frei, so dass der Druck in dem die Regelfeder 124 aufnehmenden Federraum 104 im Wesentlichen dem Druck am Eingangsanschluss P entspricht. In dieser Grundposition ist das an dem Steueranschluss X angeschlossene Kippventil geschlossen (Stellung 0) oder in der den Druck von der Pumpe durchlassenden Stellung 1.

Zum Aufsteuern des Valvistors 110 wird das Kippventil in der Stellung 2 aufgesteuert, so dass Hydrauliköl als Steueröl aus dem Federraum 104 über den Steueranschluss X, die Leitungen 106 und 22, das in Abflussrichtung aufgesteuerte Kippventil 18 und die Rücklaufleitung 26 in den Tank 12 abfließen kann. Der den Kolben 112 in Schließrichtung beaufschlagende Druck im Federraum 104 wird hierdurch abgesenkt, so dass der Kolben 112 vom Ventilsitz 142 abhebt und damit die Aufsteueröffnungen 150 durch dass sich in den Figuren nach rechts bewegende, der Steuerfeder 124 entgegengesetzte Kolbenende 151 aufgesteuert werden, wodurch die Verbindung vom Eingangsanschluss P zum Ausgangsanschluss T aufgesteuert wird. Dieses Kolbenende 151 bildet mit den Aufsteueröffnungen 150 aufsteuerbare sekundäre Steuerdurchlässe.

Durch die angesprochene Axialverschiebung des Kolbens 112 steuert die Steuerkante 152 des weiteren auch den Öffnungsquerschnitt am Steuerschlitz 148 auf, so dass Steueröl über die Kolbenbohrungen 144 und 146 und den Steuerschlitz 148 in den Federraum 104 eintreten kann. In Abhängigkeit von der Öffnung des Kippventils 18 in der Stellung 2, vom Druck am Eingangsanschluss P und von der Kraft der Regelfeder 124 wird der Kolben in eine Gleichgewichts- oder Regelposition gebracht, in der die Steuerölströmung durch den an der Steuerkante 152 durch den Steuerschlitz 148 aufgesteuerten Querschnitt des primären Steuerdurchlasses gleich der Steuerölströmung aus dem Federraum 112 durch das Kippventil 4 in dessen Stellung 2 ist, so dass bezogen auf den Federraum 104 die Summe der zulaufenden und ablaufenden Steuerölvolumenströme konstant ist.

Es wird so eine Funktion ähnlich wie bei einem Transistor, nur bezogen auf Hydraulikflüssigkeitsströme, erreicht. Der Ablass-Volumenstrom aus dem Hydraulikzylinder 24 über die Leitung 108, den Eingangsanschluss P und den Ausgangsanschluss T sowie die Rücklaufleitung 27 in den Tank 12 ist stetig abhängig von dem durch das Kippventil 18 in dessen Stellung 2 eingestellten Steuer-Volumenstrom aus der Federkammer 104 über den Steueranschluss X, die Leitungen 106 und 122, das Kippventil 18 und die Rücklaufleitung 26 in den Tank 12. Dabei kann der maximale Durchlassquerschnitt der Durchlassöffnungen 150 und damit der maximale Ablass-Volumenstrom zum Senken der Kippbrücke über die Anschlüsse P und T wesentlich größer sein, als der maximale Steuer-Volumenstrom durch das Kippventil 18 in dessen Stellung 2. Es werden so die Vorteile herkömmlich alternativer, in verschiedene Richtung gehender Lösungen kombiniert. Einerseits kann die Kippbrücke viel schneller abgesenkt werden als wenn der Ablass-Volumenstrom durch das Kippventil 18 fließen müsste und damit durch dieses begrenzt wäre. Andererseits wird eine stetige, beispielsweise proportionale Steuerbar keit des Ablass-Volumenstroms beibehalten, und das Hydrauliksystem ist kompatibel mit herkömmlichen Hydrauliksystemen, da einfach nur die erfindungsgemäße Ventilanordnung, beispielsweise in Form einer integralen Ventileinheit etwa entsprechend Figur 2, zwischen den Hydraulikzylinder 24 und das Kippventil 18 geschaltet werden muss, unter zusätzlicher Bereitstellung der Abfließmöglichkeit des Hydrauliköls aus dem Ausgangsanschluss T zu einer Hydrauliksenke, beispielsweise dem Tank 12.

In einer etwas anderen Terminologie kann man auch davon sprechen, dass der Kolben 112 mit dem Steuerschlitz 148 und der Steuerkante 152 eine Schubblende bildet, welche in Abhängigkeit des aus dem Kippventil 18 resultierenden Senksignals am Anschluss 3 für den Hydraulikzylinder stetig öffnet, beispielsweise proportional, und so über die Hauptstufe des Valvistors Hydrauliköl aus dem Hydraulikzylinder über die Anschlüsse P und T zur Hydrauliksenke ausströmen lässt. Bei dem diese Schubblende aufweisende Valvistor handelt es sich im Prinzip um 2/2-Wege-Sitzventil, welches bei der erfindungsgemäßen Anwendung über das als sogenanntes Pilotventil dienende Kippventil ansteuerbar ist. Insgesamt ist durch dieses 2/2-Wege-Vertil und das Rückschlagventil eine hydraulische 3-Wege-Weiche gebildet, die anstelle einer herkömmlichen 3-Wege-Weiche ohne stetige Steuerbarkeit des Ablass-Volumenstroms einsetzbar ist.

Führt man diese erfindungsgemäße 3-Wege-Weiche mit einem herkömmlichen Valvistor aus, so weist diese eine konstante Kreisverstärkung und damit eine konstante Abhängigkeit zwischen dem Steuer-Volumenstrom, welcher über den Anschluss 3 des Kippventils abgeführt wird, und dem Ablass-Volumenstrom, welcher unter Umgehung des Kippventils direkt zu der Hydrauliksenke abgeführt wird, auf.

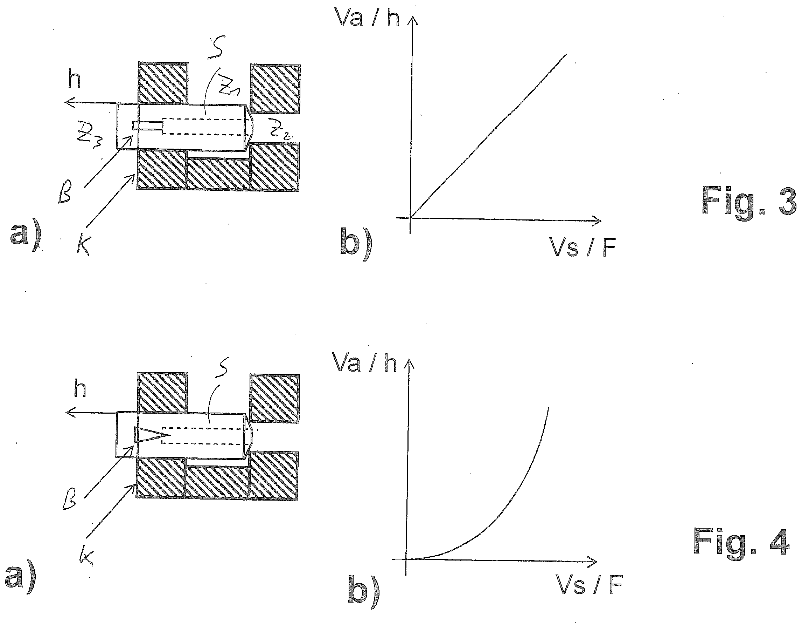

Bekannte Ausführungen eines Valvistors sind also proportional steuerbare 2/2-Wege-Ventile, die über eine linear über den Hub des betreffenden Ventilelements veränderliche Schubblende verfügen. Diese Schubblende ist typischerweise als rechteckiges Fenster mit einer bestimmten Breite w und einer über den Hub des Ventilelements (Ventilkolbens) veränderlichen Höhe h ausgebildet, so dass aus einer linearen Durchlass-Querschnittsveränderung am steuernden Ventil, hier das Kippventil, eine lineare Durchlass-Querschnittsveränderung an der Schubblende und somit auch am Durchlass-Öffnungsquerschnitt der Hauptstufe (am primären Steuerdurchlass) folgt. Der durch das steuernde Ventil eingeprägte Querschnitt entspricht also dem der Schubblende, und der Öffnungsquerschnitt der Schubblende steht in einem konstanten Verhältnis zum Öffnungsquerschnitt der Hauptstufe. Dies ist in Figur 3 veranschaulicht, die in Figur 3a) schematisch die wirksame Steuerkante K und die resultierende Schubblende B zeigt, deren Öffnungsquerschnitt linear mit dem Hub h des Sitzschieber-Ventilelements S aus dessen Position im Eingriff mit dem Ventilsitz ansteigt und so einen Volumenstrom Va durch die Hauptstufe durchlässt. Die Schubblende B steht über einen gestrichelt angedeuteten Verbindungskanal mit einem dem Eingangsanschluss P zugeordneten Bereich Z₂ in Verbindung, so dass über die Schubblende B Steueröl zu einem dem Steueranschluss X zugeordneten Bereich Z₃ durchgelassen wird bzw. durchgelassen werden kann. Ein Bereich Z₁ ist dem Ausgangsanschluss T zugeordnet.

Der Sitzschieber S bewegt sich gemäß Figur 3a) mit zunehmendem Hub h nach links, so dass der Sitzschieber S an einer Steuerkante des zusammen mit einer Ventilführung schraffiert dargestellten Ventilsitzes einen Durchlass-Öffnungsquerschnitt (sekundärer Steuerdurchlass) aufsteuert, wodurch eine Verbindung zwischen den Bereichen Z₁ und Z₂ hergestellt wird.

Das Diagramm der Figur 3b) zeigt den durchgelassenen Hauptvolumenstrom Va bzw. den Hub h als Funktion des Steuervolumenstroms Vs durch die Schubblende bzw. als Funktion des Öffnungsquerschnitts F der Schubblende B. Das lineare Steuerverhalten, also die Proportionalität zwischen dem Hauptvolumenstrom Va und dem Steuervolumenstrom Vs, ist durch die Kennlinie des Diagramms gezeigt.

Zum Erreichen eines verbesserten Feinsteuerverhaltens für die Kipperanwendung ist es aber bevorzugt, die Schubblende des 2/2-Wege-Ventils derart auszuführen, dass diese einen über den Weg oder Hub des Sitzschiebers S veränderlichen Durchgangsquerschnitt aufweist, beispielsweise in dem die Schubblende einen über den Hub veränderliche effektive Breite w aufweist.

Beispielsweise kann man durch eine in Figur 4b) beispielhaft und schematisch gezeigte Anordnung und Ausbildung der Schubblende B in Bezug auf die Steuerkante K eine quadratische Funktion für den Hub des Sitzschiebers S in Abhängigkeit vom Steuerölabfluss bzw. des Öffnungsquerschnitts der Schubblende erreichen. Allgemein wird daran gedacht, dass man einen mit den abfließenden Steuer-Volumenstrom Vₛ progressiv zunehmenden Hub des Hauptkolbens und damit eine progressive Zunahme des Öffnungsquerschnitts der Hauptstufe und dementsprechend des Hauptvolumenstroms Vₐ vorsieht, um so eine wirksame Übertragungsfunktion mit einer der Kipper-Anwendung besser entsprechenden Spreizung des Regelbereiches zu erreichen, beispielsweise für ein verbessertes Feinsteuerverhalten etwa im ersten Drittel des Hubs des Sitzschiebers S. Figur 4b) zeigt beispielhaft eine entsprechende Kennlinie mit einer etwa quadratischen Abhängigkeit.

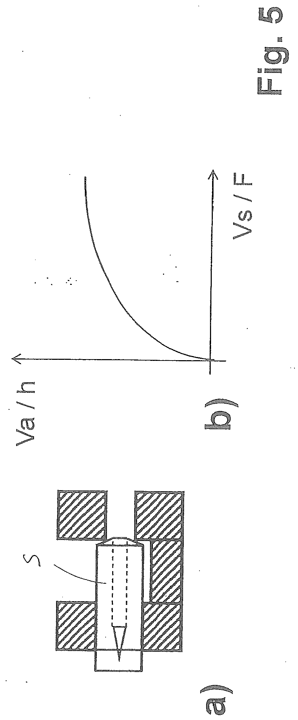

Für andere Anforderungen kann die Schubblendengeometrie auch umgekehrt werden, so dass sich für einen kleinen Steueröl-Volumenstrom ein vergleichsweise großer Haupt-Volumenstrom einstellt und der Feinsteuerbereich beispielsweise erst im letzten Drittel des Hubs des Steuerschiebers S wirksam wird, wie in Figur 5 veranschaulicht.

Durch entsprechende Ausgestaltung der angesprochenen Elemente kann man auch Kennlinien für den Zusammenhang zwischen dem Hauptvolumenstrom Vₐ (d.h. dem Ablass-Volumenstrom bei der erfindungsgemäßen Anwendung) bzw. dem Hub h und dem Steuer-Volumenstrom Vs bzw. der Öffnung F der Schubblende vorsehen, die Bereiche mit unterschiedlichen Steuerverhalten aufweisen, also beispielsweise für einen kleinen Hub progressiv und für einen größeren Hub linear. Man kann auch lineare Kennlinienabschnitte unterschiedlicher Steigung oder/und progressive oder/und degressive Kennlinienabschnitte mit unterschiedlicher differenzieller Änderung des Zusammenhangs zwischen Eingangsgröße und Ausgangsgröße vorsehen.

Die Erfindung ist in den nachstehenden Ansprüchen definiert und stellt bereit ein hydraulisches System zum Kippen wenigstens einer auf einem Kipperfahrzeug befindlichen Kippbrücke, umfassend wenigstens einen Hydraulikzylinder als Kippantriebsaggregat für die Kippbrücke, wenigstens ein Kippventil zur Steuerung eines Hubbetriebs, eines Haltebetriebs und eines Senkbetriebs des Hydraulikzylinders, wenigstens eine Hydrauliksenke und wenigstens eine Hydraulikquelle, sowie wenigstens eine zumindest mit dem Hydraulikzylinder, dem Kippventil und der Hydraulikenke in Hydraulikverbindung stehende Ventilanordnung, über welche in Abhängigkeit von Betriebszuständen des Kippventils auf Basis eines Abgabevolumenstroms der Hydraulikquelle dem Hydraulikzylinder Hydraulikflüssigkeit in einem Zuführ-Volumenstrom für den Hubbetrieb zuführbar und aus dem Hydraulikzylinder Hydraulikflüssigkeit in einem Ablass-Volumenstrom unter Umgehung des Kippventils zu der Hydrauliksenke für den Senkbetrieb ablassbar ist. Erfindungsgemäß ist vorgesehen, dass die Ventilanordnung und das Kippventil derart ausgeführt und miteinander hydraulisch verbunden sind, dass mittels des Kippventils der Ablass-Volumenstrom stetig steuerbar oder regelbar ist.

## Patentansprüche

1. Hydraulisches System zum Kippen wenigstens einer auf einem Kipperfahrzeug befindlichen Kippbrücke, umfassend:
- wenigstens einen Hydraulikzylinder (24) als Kippantriebsaggregat für die Kippbrücke,
- wenigstens ein Kippventil (18) zur Steuerung eines Hubbetriebs, eines Haltebetriebs und eines Senkbetriebs des Hydraulikzylinders,
- wenigstens eine Hydrauliksenke (12) und wenigstens eine Hydraulikquelle (16), sowie
- wenigstens eine zumindest mit dem Hydraulikzylinder (24), dem Kippventil (18) und der Hydrauliksenke (12) in Hydraulikverbindung stehende Ventilanordnung (100), über welche in Abhängigkeit von Betriebszuständen des Kippventils (18) auf Basis eines Abgabevolumenstroms der Hydraulikquelle (16) dem Hydraulikzylinder (24) Hydraulikflüssigkeit in einem Zuführ-Volumenstrom für den Hubbetrieb zuführbar und aus dem Hydraulikzylinder (24) Hydraulikflüssigkeit in einem Ablass-Volumenstrom unter Umgehung des Kippventils (18) zu der Hydrauliksenke (12) für den Senkbetrieb ablassbar ist;
**dadurch gekennzeichnet,**
**dass** mittels des Kippventils (18) der Ablass-Volumenstrom stetig steuerbar oder regelbar ist, wofür die Ventilanordnung (100) und das Kippventil (18) wie folgt ausgeführt und miteinander hydraulisch verbunden sind:
- für die Herbeiführung des Senkbetriebs ist Hydraulikflüssigkeit in einem Steuer-Volumenstrom von der Ventilanordnung (100) über das Kippventil (18) zu der Hydrauliksenke (12) ablassbar,
- der Ablass-Volumenstrom ist mittels der Ventilanordnung (100) in Abhängigkeit von dem Steuer-Volumenstrom durch das Kippventil (18) steuerbar oder regelbar, so dass der Ablass-Volumenstrom mittels des Kippventils (18) gemäß einer Ansteuerung des Kippventils steuerbar oder regelbar ist,
- die Ventilanordnung (100) umfasst wenigstens ein Stetigventil (110), vermittels dessen der resultierende Ablass-Volumenstrom stetig von dem Steuer-Volumenstrom abhängt.

2. Hydraulisches System nach Anspruch 1, **dadurch gekennzeichnet, dass** das Kippventil (18) über die Ventilanordnung (100) mit dem Hydraulikzylinder (24) in Hydraulikverbindung steht oder bringbar ist.

3. Hydraulisches System nach Anspruch 2, **dadurch gekennzeichnet, dass** der Zuführ-Volumenstrom dem Hydraulikzylinder (24) von der Hydraulikquelle (16) über eine über das Kippventil (18) und über die Ventilanordnung (100) verlaufende Hydraulikverbindung zuführbar ist.

4. Hydraulisches System nach einem der Ansprüche 1 bis 3, **dadurch gekennzeichnet, dass** die Ventilanordnung (100) wenigstens ein Rückschlagventil (102) umfasst, über welches der Zuführ-Volumenstrom unter Umgehung wenigstens eines anderen der Ventilanordnung (100) zugehörigen Ventils (110) dem Hydraulikzylinder (24) zuführbar ist.

5. Hydrauliksystem nach einem der Ansprüche 1 bis 4, **dadurch gekennzeichnet, dass** das wenigstens eine Stetigventil (110) der Ventilanordnung stetig zwischen einer im Hubbetrieb und im Haltebetrieb eingenommenen ersten Stellung und einer im Senkbetrieb bei maximalem Ablass-Volumenstrom eingenommenen zweiten Stellung verstellbares Ventilelement (112) umfasst, welches dafür ausgeführt ist, bei einer Bewegung aus der ersten Stellung in Richtung zur zweiten Stellung wenigstens einen primären Steuerdurchlass (148, 152) aufzusteuern, über den Hydraulikflüssigkeit von einer dem Hydraulikzylinder (24) zugeordneten ersten Seite des Stetigventils (110) zu einer dem Kippventil (18) zugeordneten zweiten Seite des Stetigventils (110) ablassbar ist, in Folge des Ablassens des Steuer-Volumenstroms von der zweiten Seite des Stetigventils (110) über das Kippventil (18) zu der Hydrauliksenke (12).

6. Hydrauliksystem nach Anspruch 5, **dadurch gekennzeichnet, dass** das Ventilelement (112) in der ersten Stellung einen minimalen Öffnungsquerschnitt des primären Steuerdurchlasses (148, 152) freigibt.

7. Hydrauliksystem nach Anspruch 5 oder 6, **dadurch gekennzeichnet, dass** das Ventilelement (112) dafür ausgeführt ist, bei einer Bewegung aus der ersten Stellung in Richtung zur zweiten Stellung wenigstens einen sekundären Steuerdurchlass (150, 151) aufzusteuern, über den der Ablass-Volumenstrom unter Umgehung des Kippventils (18) zu der Hydrauliksenke (12) für den Senkbetrieb ablassbar ist.

8. Hydrauliksystem nach Anspruch 7, **dadurch gekennzeichnet, dass** der sekundäre Steuerdurchlass (150, 151) in der ersten Stellung des Ventilelements (112) geschlossen ist.

9. Hydrauliksystem nach einem der Ansprüche 1 bis 8, **dadurch gekennzeichnet, dass** der Ablass-Volumenstrom monoton, vorzugsweise streng monoton, mit dem Steuer-Volumenstrom ansteigt.

10. Hydrauliksystem nach einem der Ansprüche 1 bis 9, **dadurch gekennzeichnet, dass** der Ablass-Volumenstrom bezogen auf eine die Abhängigkeit des Ablass-Volumenstroms von dem Steuer-Volumenstrom angebende Kennlinie zumindest bereichsweise linear mit dem Steuer-Volumenstrom ansteigt.

11. Hydrauliksystem einem der Ansprüche 1 bis 10, **dadurch gekennzeichnet, dass** der Ablass-Volumenstrom bezogen auf eine/die die Abhängigkeit des Ablass-Volumenstroms von dem Steuer-Volumenstrom angebende Kennlinie zumindest bereichsweise degressiv mit dem Steuer-Volumenstrom ansteigt.

12. Hydrauliksystem einem der Ansprüche 1 bis 11, **dadurch gekennzeichnet, dass** der Ablass-Volumenstrom bezogen auf eine/die die Abhängigkeit des Ablass-Volumenstroms von dem Steuer-Volumenstrom angebende Kennlinie zumindest bereichsweise progressiv mit dem Steuer-Volumenstrom ansteigt.

13. Hydrauliksystem nach einem der Ansprüche 1 bis 12, **dadurch gekennzeichnet, dass** die Ventilanordnung (100) wenigstens eine hydraulische 3-Wege-Weiche (100) bildet.

14. Hydrauliksystem nach einem der Ansprüche 1 bis 13, **dadurch gekennzeichnet, dass** das wenigstens eine Stetigventil (110) als 2-Wege-Sitzventil oder/und als Valvistor ausgeführt ist.

## Claims

1. Hydraulic system for tipping at least one tipping body located on a tipping vehicle, comprising:
- at least one hydraulic cylinder (24) as a tipper drive unit for the tipping body,
- at least one tipping valve (18) for controlling a lifting operation, a hold operation and a lowering operation of the hydraulic cylinder,
- at least one hydraulic sink (12) and at least one hydraulic source (16), and
- at least one valve arrangement (100) hydraulically connected at least to the hydraulic cylinder (24), the tipping valve (18) and the hydraulic sink (12), via which valve arrangement, depending on the operating states of the tipping valve, on the basis of an output flow rate of the hydraulic source (16), hydraulic fluid can be supplied at a supply flow rate to the hydraulic cylinder (24) for the lifting operation and hydraulic fluid can be drained at a drainage flow rate from the hydraulic cylinder (24) to the hydraulic sink (12), while bypassing the tipping valve (18), for the lowering operation;
**characterised in that**
the drainage flow rate can be continuously controlled by means of the tipping valve (18), for which the valve arrangement (100) and the tipping valve (18) are designed and hydraulically interconnected as follows:
- in order to bring about the lowering operation, the hydraulic fluid can be drained at a control flow rate from the valve arrangement (100) to the hydraulic sink (12) via the tipping valve (18),
- by means of the valve arrangement (100), the drainage flow rate is controlled depending on the control flow rate through the tipping valve (18), meaning that, by means of the tipping valve (18), the discharge flow rate can be controlled according to actuation of the tipping valve,
- the valve arrangement (100) comprises at least one proportional valve (110) by means of which the resulting drainage flow rate depends continuously on the control flow rate.

2. Hydraulic system according to claim 1, **characterised in that** the tipping valve (18) is or can be brought into hydraulic connection with the hydraulic cylinder (24) via the valve arrangement (100).

3. Hydraulic system according to claim 2, **characterised in that** the supply flow rate can be supplied to the hydraulic cylinder (24) from the hydraulic source (16) via a hydraulic connection that passes through the tipping valve (18) and the valve arrangement (100).

4. Hydraulic system according to any of claims 1 to 3, **characterised in that** the valve arrangement (100) comprises at least one non-return valve (102) via which the supply flow rate can be supplied to the hydraulic cylinder (24) while bypassing at least one other of the valves (110) associated with the valve arrangement (100).

5. Hydraulic system according to any of claims 1 to 4, **characterised in that** the at least one proportional valve (110) of the valve arrangement comprises a valve element (112) that can be continuously adjusted between a first position occupied during the lifting operation and during the hold operation and a second position occupied during the lowering operation at the maximum drainage flow rate, which valve element is designed to activate at least one primary control opening (148, 152) when there is movement from the first position towards the second position, via which control opening hydraulic fluid can be drained from a first side of the proportional valve (110) associated with the hydraulic cylinder (24) to a second side of the proportional valve (110) associated with the tipping valve (18), as a result of the control flow rate draining from the second side of the proportional valve (110) to the hydraulic sink (12) via the tipping valve (18).

6. Hydraulic system according to claim 5, **characterised in that** the valve element (112) in the first position opens a minimum opening cross section of the primary control opening (148, 152).

7. Hydraulic system according to either claim 5 or claim 6, **characterised in that** the valve element (112) is designed to activate at least one secondary control opening (150, 151) when there is movement from the first position towards the second position, via which secondary control opening the drainage flow rate can be drained to the hydraulic sink (12), while bypassing the tipping valve (18), for the lowering operation.

8. Hydraulic system according to claim 7, **characterised in that** the secondary control opening (150, 151) is closed in the first position of the valve element (112).

9. Hydraulic system according to any of claims 1 to 8, **characterised in that** the drainage flow rate increases monotonically, preferably strictly monotonically, with the control flow rate.

10. Hydraulic system according to any of claims 1 to 9, **characterised in that**, based on a characteristic curve that indicates the dependency of the drainage flow rate on the control flow rate, the drainage flow rate increases linearly with the control flow rate at least in regions.

11. Hydraulic system according to any of claims 1 to 10, **characterised in that**, based on a/the characteristic curve that indicates the dependency of the drainage flow rate on the control flow rate, the drainage flow rate increases degressively with the control flow rate at least in regions.

12. Hydraulic system according to any of claims 1 to 11, **characterised in that**, based on a/the characteristic curve that indicates the dependency of the drainage flow rate on the control flow rate, the drainage flow rate increases progressively with the control flow rate at least in regions.

13. Hydraulic system according to any of claims 1 to 12, **characterised in that** the valve arrangement (100) forms at least one hydraulic 3-way switch (100).

14. Hydraulic system according to any of claims 1 to 13, **characterised in that** the at least one proportional valve (110) is designed as a 2-way seat valve and/or as a valvistor.

## Revendications

1. Système hydraulique pour le pivotement d'au moins un pont basculant se trouvant sur un véhicule à benne basculante, comprenant :
- au moins un cylindre hydraulique (24) en tant que groupe d'entraînement de pivotement pour le pont basculant,
- au moins une soupape pivotante (18) pour la commande d'une opération de levage, d'une opération de maintien et d'une opération d'abaissement du cylindre hydraulique,
- au moins un drain hydraulique (12) et au moins une source hydraulique (16), ainsi que
- au moins un agencement de soupape (100) en liaison hydraulique au moins avec le cylindre hydraulique (24), la soupape pivotante (18) et le drain hydraulique (12), via lequel, en fonction d'états de fonctionnement de la soupape pivotante (18) sur la base d'un débit volumétrique de distribution de la source hydraulique (16), un fluide hydraulique peut être acheminé au cylindre hydraulique (24) dans un débit volumétrique d'alimentation pour l'opération de levage et un fluide hydraulique peut être évacué du cylindre hydraulique (24) dans un débit volumétrique d'évacuation en contournant la soupape pivotante (18) vers le drain hydraulique (12) pour l'opération d'abaissement ;
**caractérisé en ce que**
le débit volumétrique d'évacuation peut être commandé ou réglé en continu au moyen de la soupape pivotante (18), ce pour quoi l'agencement de soupape (100) et la soupape pivotante (18) sont réalisés comme suit et reliés l'un à l'autre de manière hydraulique :
- pour réaliser l'opération d'abaissement, un fluide hydraulique peut être évacué dans un débit volumétrique de commande depuis l'agencement de soupape (100) via la soupape pivotante (18) vers le drain hydraulique (12),
- le débit volumétrique d'évacuation peut être commandé ou réglé au moyen de l'agencement de soupape (100) en fonction du débit volumétrique de commande à travers la soupape pivotante (18), de sorte que le débit volumétrique d'évacuation puisse être commandé ou réglé au moyen de la soupape pivotante (18) conformément à une commande de la soupape pivotante,
- l'agencement de soupape (100) comprend au moins une soupape continue (110), au moyen de laquelle le débit volumétrique d'évacuation obtenu dépend continuellement du débit volumétrique de commande.

2. Système hydraulique selon la revendication 1, **caractérisé en ce que** la soupape pivotante (18) se trouve ou peut être amenée en liaison hydraulique avec le cylindre hydraulique (24) via l'agencement de soupape (100).

3. Système hydraulique selon la revendication 2, **caractérisé en ce que** le débit volumétrique d'alimentation peut être acheminé au cylindre hydraulique (24) depuis la source hydraulique (16) par le biais d'une liaison hydraulique s'étendant via la soupape pivotante (18) et via l'agencement de soupape (100).

4. Système hydraulique selon l'une quelconque des revendications 1 à 3, **caractérisé en ce que** l'agencement de soupape (100) comprend au moins un clapet antiretour (102), via lequel le débit volumétrique d'alimentation peut être acheminé au cylindre hydraulique (24) en contournant au moins une autre soupape (110) appartenant à l'agencement de soupape (100).

5. Système hydraulique selon l'une quelconque des revendications 1 à 4, **caractérisé en ce que** l'au moins une soupape continue (110) de l'agencement de soupape comprend un élément de soupape (112) réglable continuellement entre une première position occupée lors de l'opération de levage et l'opération de maintien et une seconde position occupée lors de l'opération d'abaissement à débit volumétrique d'évacuation maximal, lequel est réalisé de façon à commander, lors d'un mouvement depuis la première position vers la seconde position, au moins un passage de commande primaire (148, 152), via lequel un fluide hydraulique peut être évacué depuis un premier côté de la soupape continue (110) associé au cylindre hydraulique (24) vers un second côté de la soupape continue (110) associé à la soupape pivotante (18), à la suite de l'évacuation du débit volumétrique de commande depuis le second côté de la soupape continue (110) via la soupape pivotante (18) vers le drain hydraulique (12).

6. Système hydraulique selon la revendication 5, **caractérisé en ce que** l'élément de soupape (112) déclenche dans la première position une section d'ouverture minimale du passage de commande primaire (148, 152).

7. Système hydraulique selon la revendication 5 ou 6, **caractérisé en ce que** l'élément de soupape (112) est réalisé de façon à commander, lors d'un mouvement depuis la première position vers la seconde position, au moins un passage de commande secondaire (150, 151), via lequel le débit volumétrique d'évacuation peut être évacué en contournant la soupape pivotante (18) vers le drain hydraulique (12) pour l'opération d'abaissement.

8. Système hydraulique selon la revendication 7, **caractérisé en ce que** le passage de commande secondaire (150, 151) est fermé dans la première position de l'élément de soupape (112).

9. Système hydraulique selon l'une quelconque des revendications 1 à 8, **caractérisé en ce que** le débit volumétrique d'évacuation augmente de manière monotone, de préférence de manière strictement monotone, avec le débit volumétrique de commande.

10. Système hydraulique selon l'une quelconque des revendications 1 à 9, **caractérisé en ce que** le débit volumétrique d'évacuation augmente au moins partiellement de manière linéaire avec le débit volumétrique de commande par rapport à une ligne caractéristique indiquant la dépendance du débit volumétrique d'évacuation vis-à-vis du débit volumétrique de commande.

11. Système hydraulique selon l'une quelconque des revendications 1 à 10, **caractérisé en ce que** le débit volumétrique d'évacuation augmente au moins partiellement de manière dégressive avec le débit volumétrique de commande par rapport à une/la ligne caractéristique indiquant la dépendance du débit volumétrique d'évacuation vis-à-vis du débit volumétrique de commande.

12. Système hydraulique selon l'une quelconque des revendications 1 à 11, **caractérisé en ce que** le débit volumétrique d'évacuation augmente au moins partiellement de manière progressive avec le débit volumétrique de commande par rapport à une/la ligne caractéristique indiquant la dépendance du débit volumétrique d'évacuation vis-à-vis du débit volumétrique de commande.

13. Système hydraulique selon l'une quelconque des revendications 1 à 12, **caractérisé en ce que** l'agencement de soupape (100) forme au moins un aiguillage à trois voies hydraulique (100).

14. Système hydraulique selon l'une quelconque des revendications 1 à 13, **caractérisé en ce que** l'au moins une soupape continue (110) est réalisée en tant que soupape à siège à deux voies ou/et en tant que Valvistor.
